# FASCICULE DE BREVET EUROPEEN

(11) **EP 4 576 716 B1**
(45) Date de publication et mention de la délivrance du brevet: **20.05.2026**
(21) Numéro de dépôt: 24222336.0
(22) Date de dépôt: 20.12.2024
(51) Int. Cl.: H04L 45/16, H04L 45/48, H04L 45/00, H04L 45/484, H04L 45/18

(54) **TRANSMISSIONS DE PAQUETS DE DONNEES DANS UN RESEAU DE COMMUNICATION MAILLE DE TYPE RESEAU LOCAL**
DATENPAKETÜBERTRAGUNGEN IN EINEM LOKALEN NETZWERK-MESH-KOMMUNIKATIONSNETZWERK
DATA PACKET TRANSMISSIONS IN A MESH COMMUNICATION NETWORK SUCH AS A LOCAL AREA NETWORK

(30) Priorité: 22.12.2023 FR 2315018
(43) Date de publication de la demande: 25.06.2025
(73) Titulaire: SAGEMCOM BROADBAND SAS, 92270 Bois-Colombes (FR)
(72) Inventeur: ROCQUELAY, Antonie, 92270 BOIS-COLOMBES (FR); ALARCON, Laurent, 92270 BOIS-COLOMBES (FR); LE ROUX, Sylvain, 92270 BOIS-COLOMBES (FR)
(74) Mandataire: Cabinet Le Guen Maillet

(56) Documents cités:
- US-A1- 2012 075 988
- US-B2- 8 045 570
- US-B2- 9 008 088
- US-B2- 9 736 054

## Description

### DOMAINE TECHNIQUE

La présente invention concerne des transmissions de paquets de données dans un réseau de communication maillé de type réseau local dans lequel des dispositifs ponts sont interconnectés.

### ETAT DE LA TECHNIQUE ANTERIEURE

Plusieurs solutions existent pour réaliser un réseau de communication maillé de type réseau local, par exemple pour interconnecter des extendeurs de réseau sans-fil (e.g., WiFi) à une passerelle domestique, et notamment des technologies de dispositifs ponts (« bridge » en anglais).

Cependant, dans le cadre de ces solutions, un arbre couvrant (« spanning tree » en anglais) est défini de manière à relier l'intégralité des dispositifs ponts en éliminant toute boucle dans le réseau de communication maillé. Les boucles du réseau de communication maillé introduisent alors des redondances qui sont utilisées comme chemin de secours si un chemin principal, de l'arbre couvrant, venait à céder. L'arbre couvrant est alors redéfini afin d'utiliser de tels chemins de secours plutôt que des chemins principaux défaillants qui étaient utilisés précédemment. Néanmoins, à un instant donné, seuls les chemins principaux sont utilisés pour l'ensemble des communications dans le réseau de communication maillé, empêchant alors d'effectuer un routage spécifique des paquets de données. Une telle topologie ne permet en effet d'optimiser que les communications de, et vers, la racine dudit arbre couvrant.

Il est souhaitable de pallier ces inconvénients de l'état de la technique. Il est notamment souhaitable de fournir une solution qui permette d'améliorer le routage de paquets de données dans de tels réseaux de communication maillés, afin de mieux bénéficier de la redondance offerte par le maillage de ces réseaux de communication maillés plutôt que de s'appuyer sur un arbre couvrant pour l'acheminement de ces paquets de données.

Un exemple de routeur comprenant une première configuration pour acheminer des paquets de données en mode point-à-point et une seconde configuration pour acheminer des paquets de données en mode diffusion ou point-multipoint est décrit dans le document US 2012/075988 Al.

### EXPOSE DE L'INVENTION

Il est proposé ici un procédé de transmission de paquets de données dans un réseau de communication maillé de type réseau local qui interconnecte des dispositifs ponts, dans lequel chaque dispositif pont utilise en parallèle :
- une première configuration de premier réseau logique, qui est utilisée pour acheminer des paquets de données en mode point-à-point, et qui est définie par un routage dynamique entre les dispositifs ponts ; et
- une seconde configuration de second réseau logique, qui est utilisée pour acheminer des paquets de données en mode diffusion ou point-multipoint, et qui est définie selon un arbre couvrant par blocage d'un ou plusieurs ports des dispositifs ponts pour éliminer une ou plusieurs boucles du réseau de communication maillé.

Ainsi, grâce à cette utilisation en parallèle de la première configuration de premier réseau logique pour acheminer des paquets de données en mode point-à-point et de la seconde configuration de second réseau logique pour acheminer des paquets de données en mode diffusion ou point-multipoint, des redondances offertes par le maillage du réseau de communication maillé sont utilisées pour optimiser des transmissions de données en mode point-à-point.

Selon un mode de réalisation particulier, la seconde configuration de second réseau logique est obtenue par utilisation d'un réseau local virtuel.

Selon un mode de réalisation particulier, dans chaque dispositif pont, la première configuration de premier réseau logique implique une retranscription d'une liste au niveau 3 du modèle OSI dans une base de données de commutation de niveau 2 du modèle OSI, la liste recensant l'adresse de niveau 3 du modèle OSI de chaque dispositif du réseau de communication maillé ou connecté au réseau de communication maillé en association avec un identifiant de port du dispositif pont en question à utiliser pour acheminer des paquets de données à destination du dispositif en question, la liste étant obtenue lors du routage dynamique.

Selon un mode de réalisation particulier, lorsqu'un nouveau dispositif station est connecté à un port d'un dit dispositif pont, chaque dispositif pont effectue les étapes suivantes :
- utiliser la seconde configuration de second réseau logique pour acheminer dans le réseau de communication maillé une requête de découverte issue du nouveau dispositif station ;
- mettre à jour la base de données de commutation de niveau 2 du modèle OSI du dispositif pont en question avec une adresse MAC du nouveau dispositif station en association avec un identifiant du port, du dispositif pont en question, par lequel la requête de découverte est arrivée ;
- utiliser la base de données de commutation de niveau 2 du modèle OSI ainsi mise à jour pour acheminer dans le réseau de communication maillé une réponse à la requête de découverte, dans laquelle une adresse de niveau 3 du modèle OSI, qui est affectée au nouveau dispositif station, est incluse ;
- enrichir la liste au niveau 3 du modèle OSI avec l'adresse de niveau 3 du modèle OSI, qui est affectée au nouveau dispositif station et déterminer l'identifiant de port à y associer grâce au routage dynamique ;
- modifier la base de données de commutation de niveau 2 du modèle OSI du dispositif pont en question pour retranscrire, le cas échéant, le routage dynamique correspondant à l'adresse de niveau 3 du modèle OSI affectée au nouveau dispositif station.

Selon un mode de réalisation particulier, la première configuration de premier réseau logique est obtenue par échanges de messages de niveau 3 du modèle OSI entre voisins immédiats du réseau de communication maillé parmi les dispositifs ponts.

Selon un mode de réalisation particulier, la première configuration de premier réseau logique et la seconde configuration de second réseau logique sont mises à jour en cas de changement de topologie du réseau de communication maillé qui interconnecte les dispositifs ponts, et la première configuration de premier réseau logique uniquement est mise à jour en cas de connexion d'un dispositif station au réseau de communication maillé ou de déconnexion du dispositif station du réseau de communication maillé.

Il est également proposé ici un produit programme d'ordinateur comportant des instructions causant une implémentation du procédé exposé ci-dessus dans l'un quelconque de ses modes de réalisation, lorsque les instructions sont exécutées par un processeur. Il est aussi proposé un support de stockage d'informations comportant des instructions causant une implémentation du procédé exposé ci-dessus dans l'un quelconque de ses modes de réalisation, lorsque les instructions sont lues depuis le support de stockage d'informations et exécutées par un processeur.

Il est également proposé ici un dispositif pont destiné à être utilisé dans un réseau de communication maillé de type réseau local qui interconnecte plusieurs tels dispositifs ponts, le dispositif pont comportant de la circuiterie électronique configurée pour utiliser en parallèle :
- une première configuration de premier réseau logique, qui est utilisée pour acheminer des paquets de données en mode point-à-point, et qui est définie par un routage dynamique entre les dispositifs ponts ; et
- une seconde configuration de second réseau logique, qui est utilisée pour acheminer des paquets de données en mode diffusion ou point-multipoint, et qui est définie selon un arbre couvrant par blocage d'un ou plusieurs ports des dispositifs ponts pour éliminer une ou plusieurs boucles du réseau de communication maillé.

Il est également proposé ici un réseau de communication maillé de type réseau local qui interconnecte plusieurs dispositifs ponts comme exposé ci-dessus.

Selon un mode de réalisation particulier, un dit dispositif pont est inclus dans une passerelle domestique et les autres dits dispositifs ponts sont respectivement inclus dans des extendeurs de réseau local sans-fil.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication maillé ;
[Fig. 2] illustre schématiquement un exemple d'agencement matériel adapté pour implémenter un dispositif du réseau de communication maillé ;
[Fig. 3A] illustre schématiquement un algorithme de procédé de transmission de paquets de données dans le réseau de communication maillé ;
[Fig. 3B] illustre schématiquement un algorithme de procédé de prise en compte d'un nouveau dispositif station connecté au réseau de communication maillé ;
[Fig. 4] illustre schématiquement le réseau de communication maillé selon un exemple de configuration de réseau logique adapté à des transmissions de paquets de données en mode diffusion ou point-multipoint ;
[Fig. 5A] illustre schématiquement des opérations d'acheminement d'une requête de découverte dans le réseau de communication maillé ;
[Fig. 5B] illustre schématiquement des contenus de bases de données de commutation, au niveau 2 du modèle OSI, de dispositifs ponts du réseau de communication maillé suite aux opérations d'acheminement de requête de découverte de la Fig. 5A ;
[Fig. 5C] illustre schématiquement des opérations d'acheminement, dans le réseau de communication maillé, d'une réponse à la requête de découverte de la Fig. 5A;
[Fig. 5D] illustre schématiquement des échanges entre dispositifs ponts qui sont voisins immédiats dans le réseau de communication maillé ;
[Fig. 5E] illustre schématiquement des contenus de listes, au niveau 3 du modèle OSI, suite aux échanges de la Fig. 5D ; et
[Fig. 5F] illustre schématiquement une retranscription, dans les bases de données de commutation des dispositifs ponts, des contenus des listes de la Fig. 5E.

### EXPOSE DETAILLE DE MODES DE REALISATION

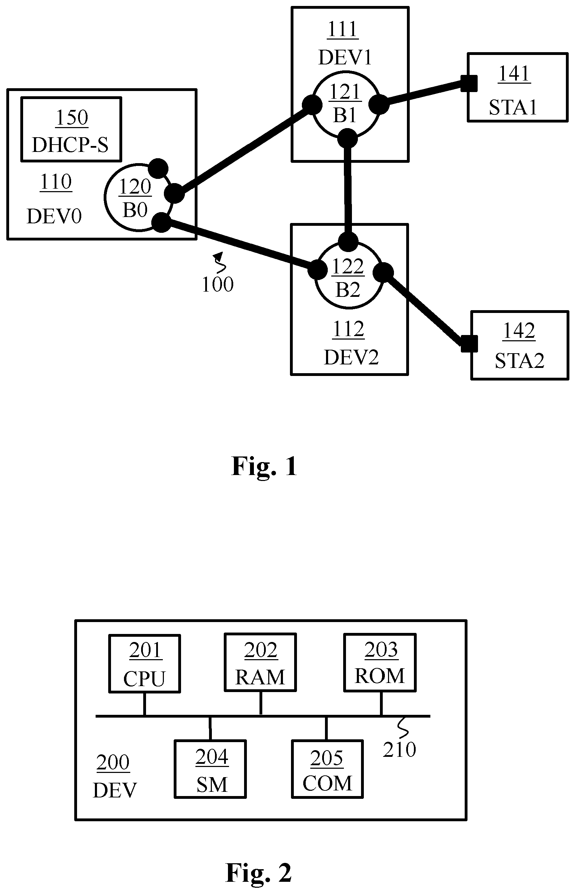

La Fig. 1 illustre ainsi schématiquement un réseau de communication maillé 100 de type réseau local qui interconnecte des dispositifs ponts B0 120, B1 121, B2 122.

Les dispositifs ponts B0 120, B1 121, B2 122 mettent conjointement en place des mécanismes de routage pour acheminer des paquets de données dans le réseau de communication maillé 100. Le réseau de communication maillé 100 est adapté et configuré pour accueillir des dispositifs stations STA1 141, STA2 142 et leur permettre de communiquer au travers du réseau de communication maillé 100. Par exemple, les dispositifs stations STA1 141, STA2 142 peuvent communiquer entre eux et/ou communiquer avec une fonctionnalité d'un dispositif dans lequel est inclus un dit dispositif pont, telle qu'une fonctionnalité de passerelle (e.g., pour accéder à l'Internet) ou une fonctionnalité de serveur DHCP (« Dynamic Host Configuration Protocol » en anglais).

Les dispositifs stations STA1 141, STA2 142 sont par exemple des ordinateurs, des tablettes électroniques ou des téléphones mobiles multifonctions, ou tout type d'équipement électronique communicants (TV, décodeur audiovisuel...). On parle, de manière équivalente, de dispositif terminal.

Les dispositifs ponts sont typiquement inclus dans des dispositifs offrant des fonctionnalités supplémentaires. Ainsi, sur la Fig. 1, le dispositif pont B0 120 est inclus dans un dispositif DEV0 110, le dispositif pont B1 121 est inclus dans un dispositif DEV1 111 et le dispositif pont B2 122 est inclus dans un dispositif DEV2 112. Ainsi, par exemple, le dispositif DEV0 110 qui inclut le dispositif pont B0 120 inclut en outre un serveur DHCP (libellé DHCP-S sur la Fig. 1) 150.

Dans un mode de réalisation, un dispositif pont (le dispositif pont B0 120 sur la Fig. 1) est inclus dans une passerelle domestique, et les autres dispositifs ponts (les dispositifs ponts B1 121 et B2 122 sur la Fig. 1) sont respectivement inclus dans des extendeurs de réseau local sans-fil, tels que des extendeurs Wi-Fi qui permettent d'étendre la couverture Wi-Fi d'un réseau local.

Plus précisément, pour acheminer les paquets de données dans le réseau de communication maillé 100, chacun des dispositifs ponts B0 120, B1 121, B2 122 utilise en parallèle :
- une première configuration de premier réseau logique, qui est utilisée pour acheminer des paquets de données en mode point-à-point (« unicast » en anglais), et qui est définie par un routage dynamique (aussi appelé routage adaptatif) entre les dispositifs ponts B0 120, B1 121, B2 122 ; et
- une seconde configuration de second réseau logique, qui est utilisée pour acheminer des paquets de données en mode diffusion (« broadcast » en anglais) ou point-multipoint (« multicast » en anglais), et qui est définie selon un arbre couvrant (« spanning tree » en anglais) par blocage d'un ou plusieurs ports des dispositifs ponts B0 120, B1 121, B2 122 pour éliminer une ou plusieurs boucles du réseau de communication maillé 100.

Dans un mode de réalisation particulier, la seconde configuration de second réseau logique est obtenue par utilisation d'un réseau local virtuel. En d'autres termes, un réseau local virtuel est utilisé pour réaliser diverses opérations permettant de définir l'arbre couvrant. Cela permet d'assurer aisément que ces opérations n'interfèrent pas avec la définition de la première configuration de premier réseau logique.

Par souci de simplicité de description, la Fig. 1 présente un réseau de communication maillé comportant uniquement trois dispositifs ponts. Il est toutefois entendu que ce qui est décrit ici s'applique à des réseaux de communication maillés présentant des maillages bien plus complexes avec une quantité plus élevée de dispositifs ponts.

La Fig. 2 illustre schématiquement un exemple d'agencement matériel adapté pour implémenter un dispositif DEV 200 du réseau de communication maillé 100, tel que les dispositifs DEV0 110, DEV1 111 et DEV2 112.

L'agencement matériel présenté comporte, reliés par un bus de communication 210 : un processeur ou CPU (« Central Processing Unit » en anglais) 201 ; une mémoire vive RAM (« Random-Access Memory » en anglais) 202 ; une mémoire non volatile, par exemple de type ROM (« Read Only Memory » en anglais) 203 ou EEPROM (« Electrically-Erasable Programmable ROM » en anglais), ou de type Flash ; une unité de stockage, telle qu'un support de stockage SM 204, par exemple un disque dur HDD (« Hard Disk Drive » en anglais), ou un lecteur de support de stockage, tel qu'un lecteur de cartes SD (« Secure Digital » en anglais) ; et un gestionnaire d'interfaces de communication COM 205.

Le gestionnaire d'interfaces de communication COM 205 permet à l'agencement matériel présenté d'interagir avec d'autres dispositifs du réseau de communication maillé 100 ou qui sont connectés au réseau de communication maillé 100. Les interfaces de communication sont par exemple des interfaces Wi-Fi sur différentes bandes de fréquences (2,4 GHz, 5 GHz, 6 GHz), des interfaces Ethernet... A noter que plusieurs ports de dispositif pont peuvent être virtualisés sur une même interface physique de communication.

Le processeur ou CPU 201 est capable d'exécuter des instructions chargées dans la mémoire vive 202, notamment à partir de la mémoire non volatile 203 ou du support de stockage SM (tel qu'une carte SD) 204. Lorsque l'agencement matériel présenté est mis sous tension, le processeur ou CPU 201 est ainsi capable de lire de la mémoire vive RAM 202 des instructions et de les exécuter. Ces instructions forment un programme d'ordinateur causant notamment l'implémentation, par le processeur ou CPU 201, des étapes, procédés et comportements décrits ici en relation avec le dispositif auquel le dispositif DEV 200 correspond.

Tout ou partie des étapes, procédés et comportements décrits ici peut ainsi être implémenté sous forme logicielle par exécution d'un ensemble d'instructions par une machine programmable, par exemple un processeur de type DSP (« Digital Signal Processor » en anglais) ou un microcontrôleur, ou être implémenté sous forme matérielle par une machine ou un composant électronique (« chip » en anglais) dédié ou un ensemble de composants électroniques (« chipset » en anglais) dédié, par exemple un composant FPGA (« Field Programmable Gate Array » en anglais) ou ASIC (« Application Specific Integrated Circuit » en anglais). D'une manière générale, les dispositifs du réseau de communication maillé 100, tels que les dispositifs DEV0 110, DEV1 111 et DEV2 112 (et par conséquent les dispositifs ponts B0 120, B1 121, B2 122), comportent de la circuiterie électronique adaptée et configurée pour implémenter les étapes, procédés et comportements décrits ici.

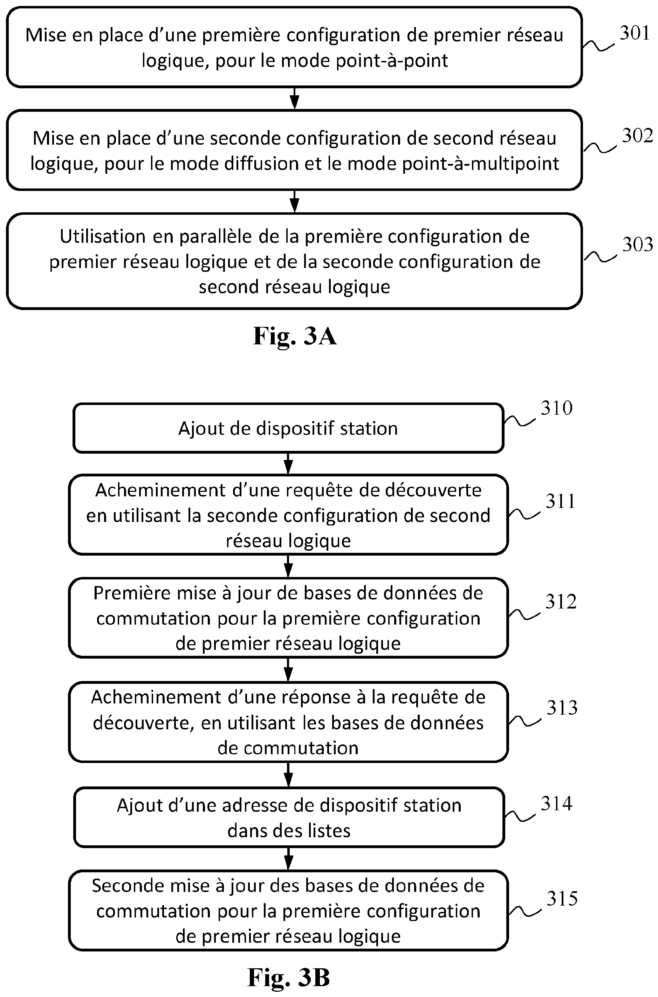

La Fig. 3A illustre schématiquement un algorithme de procédé de transmission de paquets de données dans le réseau de communication maillé 100.

Dans une étape 301, les dispositifs ponts B0 120, B1 121, B2 122 coopèrent pour mettre en place une première configuration de premier réseau logique qui est destinée à acheminer des paquets de données en mode point-à-point (« unicast » en anglais) au travers du réseau de communication maillé 100. Plus particulièrement, chaque dispositif pont B0 120, B1 121, B2 122 met en place la première configuration de premier réseau logique, qui est définie par un routage dynamique entre les dispositifs ponts.

Le routage dynamique est un processus, bien connu de l'homme du métier des réseaux de communication maillés, au cours duquel les dispositifs ponts B0 120, B1 121, B2 122 établissent des chemins à emprunter par les paquets de données en mode point-à-point parmi différents chemins candidats entre un dispositif source et un dispositif destinataire dans le réseau de communication maillé 100, en fonction de coûts de transmission déterminés pour les différents chemins candidats. Par exemple, les dispositifs ponts B0 120, B1 121, B2 122 utilisent un protocole de routage dynamique tel qu'un protocole de routage à vecteur de distance, ou un protocole de routage à état de liens, ou le protocole OSPF (« Open Shortest Path First » en anglais) tel que défini dans sa 2^{e} version dans le document normatif RFC 2328.

Ainsi, la première configuration de premier réseau logique permet de tirer parti du maillage (et donc des potentielles boucles) offert par 1e réseau de communication maillé 100 pour optimiser les chemins empruntés par les transmissions de paquets de données en mode point-à-point.

Dans une étape 302, les dispositifs ponts B0 120, B1 121, B2 122 coopèrent pour mettre en place une seconde configuration de second réseau logique qui est destinée à acheminer des paquets de données en mode diffusion (« broadcast » en anglais) et des paquets de données en mode point-multipoint (« multicast » en anglais), au travers du réseau de communication maillé 100. Plus particulièrement, chaque dispositif pont B0 120, B1 121, B2 122 met en place la seconde configuration de second réseau logique, qui est définie selon un arbre couvrant (« spanning tree » en anglais) par blocage d'un ou plusieurs ports des dispositifs ponts pour éliminer une ou plusieurs boucles du réseau de communication maillé 100.

Un arbre couvrant, bien connu de l'homme du métier des réseaux de communication maillés, est un sous-ensemble d'interconnections d'un réseau de communication maillé interconnectant des dispositifs nœuds qui couvre l'intégralité des dispositifs nœuds sans redondance de liaison entre les dispositifs nœuds. L'arbre couvrant est typiquement obtenu selon un protocole de niveau 2 (niveau liaison (« link level » en anglais)) dans le modèle OSI (« Open Systems Interconnection » en anglais). Par exemple, les dispositifs ponts B0 120, B1 121, B2 122 utilisent le protocole STP (« Spanning Tree protocol » en anglais) tel que défini dans la norme IEEE 802.1D. La racine de l'arbre couvrant peut être un dispositif pont en particulier, comme par exemple un dispositif pont inclus dans une passerelle résidentielle.

Les étapes 301 et 302 peuvent être exécutées en ordre inverse. Les étapes 301 et 302 sont réitérées lorsqu'un changement de topologie intervient dans le réseau de communication maillé 100 (insertion d'un dispositif pont, disparition d'un dispositif pont, apparition d'un nouveau lien entre dispositifs ponts, disparition d'un lien entre dispositifs ponts, changement d'au moins une caractéristique d'au moins un lien entre dispositifs ponts de sorte à entraîner un changement d'au moins un score (ou un coût) de route dans le réseau de communication maillé 100, et donc une détermination de nouvelles routes optimisées à travers le réseau de communication maillé 100 et éventuellement d'un nouvel arbre couvrant).

Dans une étape 303, chaque dispositif pont B0 120, B1 121, B2 122 utilise en parallèle la première configuration de premier réseau logique, pour acheminer des paquets de données en mode point-à-point au travers du réseau de communication maillé 100, et la seconde configuration de second réseau logique, pour acheminer des paquets de données en mode diffusion ou point-multipoint dans le réseau de communication maillé 100.

Lorsqu'une modification de topologie du réseau de communication maillé 100 dans les interconnexions entre les dispositifs ponts intervient, l'étape 301 et l'étape 302 sont répétées pour modifier éventuellement la première configuration de premier réseau logique (nouvelle optimisation des chemins point-à-point) et la seconde configuration de second réseau logique (nouvelle définition d'arbre couvrant). Par exemple, un des dispositifs DEV0 110 ou DEV1 111 ou DEV2 112 déjà présent dans le réseau de communication maillé 100, voit ses caractéristiques changées ou modifiées au point d'entraîner un changement de topologie du réseau de communication maillé 100. Il peut s'agir par exemple de l'ajout d'un module de connectivité apportant un port supplémentaire. Il peut aussi s'agir d'une panne affectant l'un des ports. Il peut s'agir aussi par exemple d'une mise à jour logicielle modifiant des fonctionnalités de communication sans-fil ou modifiant la configuration du dispositif en question.

La Fig. 3B illustre schématiquement un algorithme de procédé de prise en compte d'un nouveau dispositif station connecté au réseau de communication maillé 100. Le nouveau dispositif station désigne un dispositif ou équipement nouvellement arrivé ou connecté au réseau de communication maillé 100.

Dans une étape 310, un nouveau dispositif station est connecté au réseau de communication maillé 100. Le nouveau dispositif station est relié au travers d'un port d'un dispositif pont du réseau de communication maillé 100.

Dans une étape 311, une requête de découverte est transmise par le nouveau dispositif station afin d'obtenir une adresse routable, à savoir une adresse de niveau 3 du modèle OSI. La requête de découverte est transmise en mode diffusion, de sorte que l'acheminement de la requête de découverte suit la seconde configuration de second réseau logique (arbre couvrant).

Dans une étape 312, au fur et à mesure de la progression dans le réseau de communication maillé de la diffusion de la requête de découverte, une base de données de commutation de niveau 2 du modèle OSI de chaque dispositif pont est mise à jour avec une adresse de niveau 2 du modèle OSI (typiquement, une adresse MAC (« Medium Access Control » en anglais)) du nouveau dispositif station en association avec un identifiant du port, du dispositif pont en question, par lequel la requête de découverte est arrivée.

Dans une étape 313, une réponse à la requête de découverte est transmise à destination du nouveau dispositif station. Une adresse routable, de niveau 3 du modèle OSI, qui est affectée au nouveau dispositif station, est incluse dans la réponse à la requête de découverte. La réponse à la requête de découverte est transmise en mode point-à-point. Ainsi, dans chaque dispositif pont en chemin, la base de données de commutation de niveau 2 du modèle OSI telle que mise à jour à l'étape 312 est utilisée.

Dans une étape 314, l'adresse routable, de niveau 3 du modèle OSI, attribuée au nouveau dispositif station est ajoutée à une liste L qui recense des adresses de niveau 3 du modèle OSI des dispositifs présents dans le réseau de communication maillé 100 ou connectés au réseau de communication maillé 100, et ce, au sein de chaque dispositif pont du réseau de communication maillé 100. Dans chaque liste L, chaque adresse de niveau 3 du modèle OSI est associée avec l'identifiant du port (du dispositif pont en question) par lequel communiquer en mode point-à-point avec le dispositif auquel l'adresse en question est affectée, ce port étant déterminé par le routage dynamique. L'adresse du nouveau dispositif station vient ainsi enrichir la liste L au sein de chaque dispositif pont.

A noter que, dans chaque dispositif pont, la liste L peut avoir un format similaire à une table de routage ; cependant, cette liste L n'est pas utilisée pour effectuer du routage, et c'est une retranscription de cette liste L au niveau 2 du modèle OSI qui va permettre au dispositif pont en question d'acheminer de manière optimisée les paquets de données en mode point-à-point dans le réseau de communication maillé 100.

Dans une étape 315, le routage dynamique correspondant à l'adresse de niveau 3 du modèle OSI affectée au nouveau dispositif station est retranscrit, pour chaque dispositif pont du réseau de communication maillé 100, dans la base de données de commutation de niveau 2 du modèle OSI du dispositif pont en question. Dans chaque dispositif pont, la liste L évoquée à l'étape 314 est utilisée pour ce faire. Une seconde mise à jour de la base de données de commutation de niveau 2 du modèle OSI de chaque dispositif pont est réalisée le cas échéant pour prendre en compte le routage dynamique correspondant au nouveau dispositif station.

Le procédé de la Fig. 3A est décrit ci-dessus en relation avec l'ajout d'un dispositif station. Le même comportement s'applique dans le cadre d'un ajout d'un nouveau dispositif pont (dont l'adresse de niveau 3 du modèle OSI apparaît donc dans la liste L des autres dispositifs ponts du réseau de communication maillé 100, ce qui entraîne une retranscription dans leur base de données de commutation de niveau 2 du modèle OSI). Il peut s'agir par exemple d'un dispositif d'extension de couverture de communication sans-fil (« extender » en anglais) nouvellement ajouté dans la topologie du réseau de communication maillé 100.

Un exemple d'exécution des procédés des Figs. 3A et 3B est détaillé ci-après.

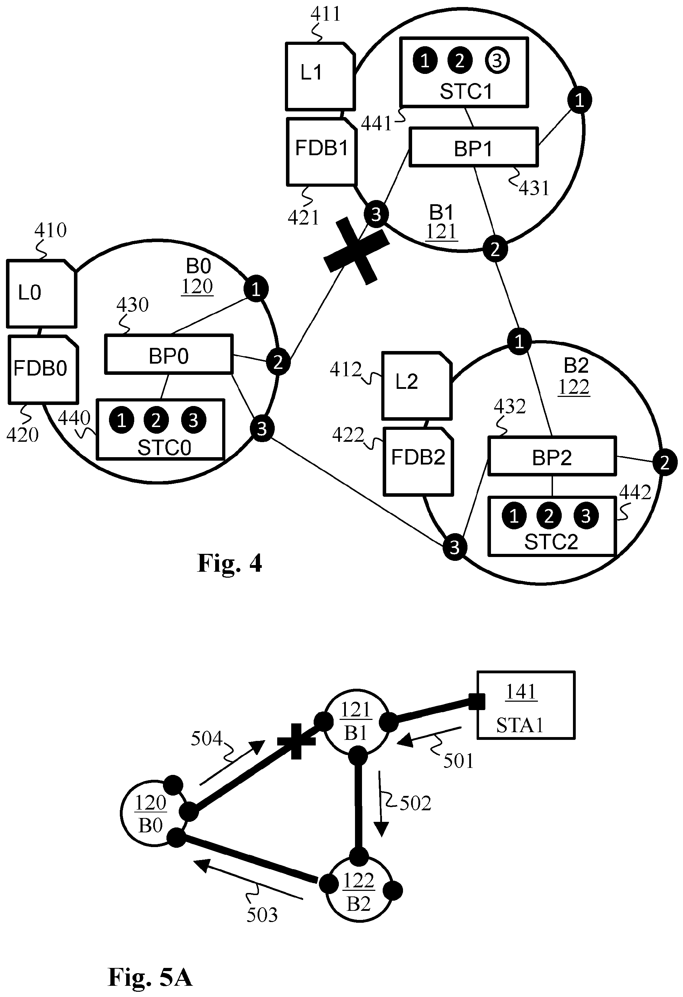

La Fig. 4 illustre schématiquement le réseau de communication maillé 100 de la Fig. 1 selon un exemple de seconde configuration de second réseau logique (*i.e.,* pour acheminer des paquets de données en mode diffusion ou point-multipoint).

Comme illustré sur la Fig. 1, le réseau de communication maillé 100 présente une boucle entre les dispositifs ponts B0 120, B1 121, B2 122, qui disposent chacun de trois ports, numérotées de 1 à 3. Comme détaillé sur la Fig. 4, le port 2 du dispositif pont B0 120 est relié au port 3 du dispositif pont B1 121, le port 3 du dispositif pont B0 120 est relié au port 3 du dispositif pont B2 122, et le port 1 du dispositif pont B0 120 n'est connecté à aucun dispositif pont. De plus, le port 2 du dispositif pont B1 121 est relié au port 1 du dispositif pont B2 122, et le port 1 du dispositif pont B1 121 et le port 2 du dispositif pont B2 122 ne sont connectés à aucun dispositif pont.

Chaque dispositif pont comporte un processeur (matériel ou logiciel) de pont connecté à chacun des ports du dispositif pont en question, afin de traiter des paquets de données qui transitent via ces ports. Ainsi, le dispositif pont B0 120 comporte un processeur de pont BP0 430, le dispositif pont B1 121 comporte un processeur de pont BP1 431, et le dispositif pont B2 122 comporte un processeur de pont BP2 432.

Chaque dispositif pont comporte en outre une base de données de commutation (appelée « Forwarding Database » en anglais) de niveau 2 du modèle OSI. La base de données de commutation comporte des entrées indiquant des adresses, de niveau 2 du modèle OSI, de dispositifs connus du réseau de communication 100, en association avec l'identifiant du port du dispositif pont en question par lequel doit sortir tout paquet de données destiné au dispositif connu en question.

Chaque dispositif pont comporte en outre une liste L comme déjà évoqué ci-dessus (de niveau 3 du modèle OSI). Ainsi, le dispositif pont B0 120 comporte une liste L0 410, le dispositif pont B1 121 comporte une liste L1 411, et le dispositif pont B2 122 comporte une liste L2 412.

Pour le mode point-à-point, si pour un dispositif la base de données de commutation ne devait pas être renseignée, le paquet de données à destination du dispositif en question serait jeté. Une telle situation est possible pendant une phase transitoire de propagation de règles de routage dynamique et de leur retranscription, au sein de chaque dispositif pont, dans la base de données de commutation.

Chaque dispositif pont comporte en outre une description de la seconde configuration de second réseau logique telle qu'elle doit être localement appliquée par le dispositif pont en question. Pour chaque dispositif pont, cette description reflète le résultat de la définition locale de l'arbre couvrant à appliquer dans le réseau de communication maillé 100. Ainsi, le dispositif pont B0 120 comporte une description STC0 440 de la seconde configuration de second réseau logique qui indique que les trois ports du dispositif pont B0 120 sont conservés dans l'arbre couvrant applicable. Cela signifie qu'un paquet de données transmis en mode diffusion ou point-multipoint qui est reçu via n'importe lequel des ports du dispositif pont B0 120 est propagé par le processeur de pont BP0 430 via les autres ports du dispositif pont B0 120. De la même manière, le dispositif pont B2 122 comporte une description STC2 442 de la seconde configuration de second réseau logique qui indique que les trois ports du dispositif pont B2 122 sont conservés dans l'arbre couvrant applicable. Cela signifie qu'un paquet de données transmis en mode diffusion ou point-multipoint qui est reçu via n'importe lequel des ports du dispositif pont B2 122 est propagé par le processeur de pont BP2 432 via les autres ports du dispositif pont B2 122. Une élimination de boucle est résolue au niveau du dispositif pont B1 121. Ainsi, le dispositif pont B1 121 comporte une description STC1 441 de la seconde configuration de second réseau logique qui indique que les ports 1 et 2 du dispositif pont B1 121 sont conservés dans l'arbre couvrant applicable mais qu'un blocage du port 3 du dispositif pont B1 121 est opéré dans l'arbre couvrant applicable. Cela signifie qu'un paquet de données transmis en mode diffusion ou point-multipoint qui est reçu via le port 3 du dispositif pont B1 121 est jeté par le processeur de pont BP1 431. De plus, un paquet de données transmis en mode diffusion ou point-multipoint qui est reçu via le port 1 (respectivement 2) du dispositif pont B1 121 est propagé par le processeur de pont BP1 431 via le port 2 (respectivement 1) du dispositif pont B1 121, mais pas par le port 3 du dispositif pont B1 121. Ce blocage du port 3 du dispositif pont B1 121, pour les paquets de données transmis en mode diffusion ou point-multipoint, est marqué d'une croix sur la Fig. 4.

Ainsi, grâce au blocage du port 3 du dispositif pont B1 121, le premier réseau logique défini d'après la topologie du réseau de communication maillé 100 est un arbre couvrant qui inclut tous les dispositifs ponts B0 120, B1 121, B2 122 sans présence de boucle. La transmission de paquets de données en mode diffusion et en mode point-multipoint peut ainsi être aisément assurée dans le réseau de communication maillé 100.

La Fig. 5A illustre schématiquement des opérations d'acheminement de requête de découverte dans le réseau de communication maillé 100 lorsqu'un nouveau dispositif station est connecté à un port d'un dit dispositif pont. Le nouveau dispositif station ajouté ici est, de manière illustrative, le dispositif station STA1 141 présenté en relation avec la Fig. 1.

Le dispositif station STA1 141 est connecté au port 1 du dispositif pont B1 121. Le dispositif station STA1 141 cherche à se voir affecter une adresse routable, typiquement de niveau 3 dans le modèle OSI (telle qu'une adresse IP (« Internet Protocol » en anglais). Pour ce faire, le dispositif station STA1 141 transmet en mode diffusion une requête de découverte, dans une étape 501. Dans un mode de réalisation particulier, la requête de découverte est un message de type « DHCP Discover » selon le protocole DHCP. L'acheminement dans le réseau de communication maillé 100 suit donc le second réseau logique détaillé ci-dessus en relation avec la Fig. 4.

Ainsi, la requête de découverte est reçue sur le port 1 du dispositif pont B1 121, et le processeur de pont BP1 431 propage la requête de découverte conformément à la description STC1 441 de la seconde configuration de second réseau logique. Le port 3 du dispositif pont B1 121 étant bloqué, le processeur de pont BP1 431 propage la requête de découverte sur le port 2 du dispositif pont B1 121, dans une étape 502. Le processeur de pont BP1 431 fournit la requête de découverte aussi en interne du dispositif DEV1 111 pour traitement éventuel (mais ici le dispositif DEV1 111 n'est pas en charge de répondre à la requête de découverte).

La requête de découverte est alors reçue sur le port 1 du dispositif pont B2 122, et le processeur de pont BP2 432 propage la requête de découverte conformément à la description STC2 442 de la seconde configuration de second réseau logique. Le processeur de pont BP2 432 propage donc la requête de découverte sur les ports 2 et 3 du dispositif pont B2 122, dans une étape 503. Le processeur de pont BP2 432 fournit la requête de découverte aussi en interne du dispositif DEV2 112 pour traitement éventuel (mais ici le dispositif DEV2 112 n'est pas en charge de répondre à la requête de découverte).

La requête de découverte est alors reçue sur le port 3 du dispositif pont B0 120, et le processeur de pont BP0 430 propage la requête de découverte conformément à la description STC0 440 de la seconde configuration de second réseau logique. Le processeur de pont BP0 430 propage donc la requête de découverte sur les ports 1 et 2 du dispositif pont B0 120, dans une étape 504. Le processeur de pont BP0 430 fournit la requête de découverte aussi en interne du dispositif DEV0 110 pour traitement éventuel (ce qui est le cas ici). Etant donné que le port 3 du dispositif pont B1 121 est bloqué, le processeur de pont BP1 431 jette la requête de découverte telle que propagée par le dispositif pont B0 120.

Au fur et à mesure de l'acheminement de la requête de découverte dans le réseau de communication maillé 100, chaque dispositif pont met à jour sa propre base de données de commutation avec une adresse MAC du nouveau dispositif station STA1 141 en association avec un identifiant du port, du dispositif pont en question, par lequel la requête de découverte est arrivée. Ainsi, à ce stade, les bases de données de commutation des dispositifs ponts du le réseau de communication maillé 100 reflètent un acheminement de paquets de données à destination du nouveau dispositif station STA1 141 en mode point-à-point qui suit le second réseau logique.

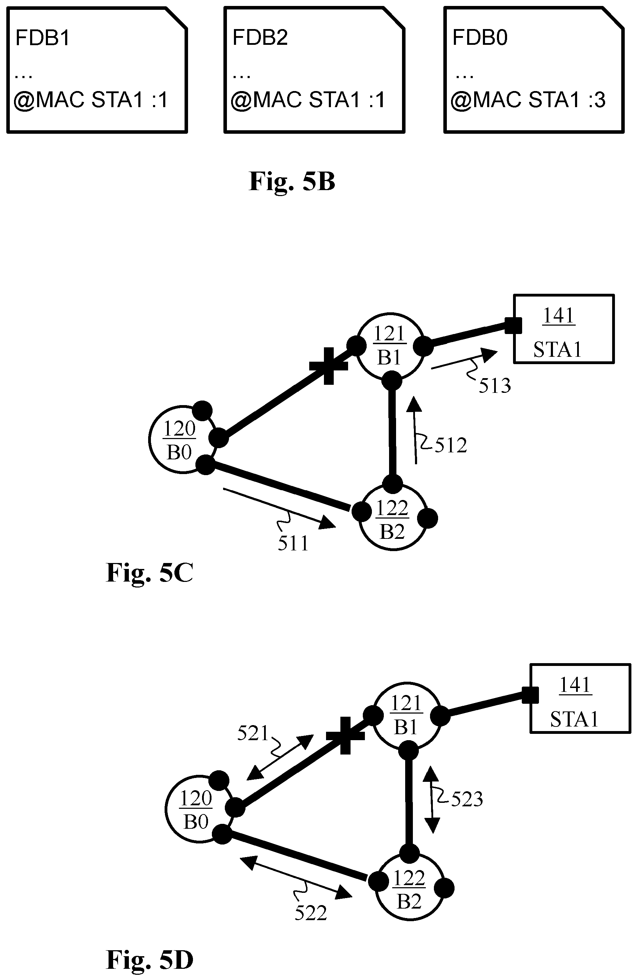

La Fig. 5B illustre schématiquement des contenus de bases de données de commutation de dispositifs ponts du réseau de communication maillé suite aux opérations d'acheminement de requête de découverte de la Fig. 5A.

Lorsque la requête de découverte a été reçue sur le port 1 du dispositif pont B1 121, le processeur de pont BP1 431 a mis à jour la base de données de commutation FDB1 421 en ajoutant une entrée pour le nouveau dispositif station STA1 141. Ainsi, comme illustré sur la Fig. 5B, la base de données de commutation FDB1 421 est mise à jour avec l'adresse MAC du nouveau dispositif station STA1 141, accompagnée de l'identifiant du port (ici le port 1) par lequel la requête de découverte émise par le nouveau dispositif station STA1 141 a été reçue par le dispositif pont B1 121, à savoir « @MAC STA1 : 1 ».

Et lorsque la requête de découverte a été reçue sur le port 1 du dispositif pont B2 122, le processeur de pont BP2 432 a mis à jour la base de données de commutation FDB2 422 en ajoutant une entrée pour le nouveau dispositif station STA1 141. Ainsi, comme illustré sur la Fig. 5B, la base de données de commutation FDB2 422 est mise à jour avec l'adresse MAC du nouveau dispositif station STA1 141, accompagnée de l'identifiant du port (ici le port 1) par lequel la requête de découverte émise par le nouveau dispositif station STA1 141 a été reçue par le dispositif pont B2 122, à savoir « @MAC STA1 : 1 ».

Enfin lorsque la requête de découverte a été reçue sur le port 3 du dispositif pont B0 120, le processeur de pont BP0 430 a mis à jour la base de données de commutation FDB0 420 en ajoutant une entrée pour le nouveau dispositif station STA1 141. Ainsi, comme illustré sur la Fig. 5B, la base de données de commutation FDB0 420 est mise à jour avec l'adresse MAC du nouveau dispositif station STA1 141, accompagnée de l'identifiant du port (ici le port 3) par lequel la requête de découverte émise par le nouveau dispositif station STA1 141 a été reçue par le dispositif pont B0 120, à savoir « @MAC STA1 : 3 ».

La requête de découverte est destinée à être traitée par un serveur d'attribution d'adresses routables (adresses de niveau 3 du modèle OSI). Sur la Fig. 1, le serveur DHCP-S 150 est apte à apporter une réponse à la requête de découverte émise par le nouveau dispositif station STA1. Le serveur DHCP-S 150 attribue une adresse routable, de niveau 3 du modèle OSI (typiquement une adresse IP), au nouveau dispositif station STA1. Le serveur DHCP-S 150 génère alors une réponse à la requête de découverte, de sorte à informer le dispositif station STA1 de l'adresse routable qui lui a été attribuée. Dans un mode de réalisation particulier, la réponse à la requête de découverte est un message de type « DHCP Offer » selon le protocole DHCP.

Les contenus des bases de données de commutation FDB0 420, FDB1 421, FDB2 422 permettent d'acheminer la réponse à la requête de découverte, dans le réseau de communication maillé 100, en mode point-à-point bien que le routage dynamique ne soit pas encore pris en compte pour le nouveau dispositif station STA1 141.

La Fig. 5C illustre schématiquement des opérations d'acheminement, dans le réseau de communication maillé 100, de la réponse à la requête de découverte acheminée comme schématiquement illustré sur la Fig. 5A.

Lorsque le processeur de pont BP0 430 reçoit du serveur DHCP-S 150 la réponse à transmettre au nouveau dispositif station STA1 141, le processeur de pont BP0 430 scrute la base de données de commutation FDB0 420 pour déterminer via quel port transmettre en mode point-à-point un paquet de données au nouveau dispositif station STA1 141. Ainsi, dans une étape 511, le processeur de pont BP0 430 propage la réponse à la requête de découverte via le port 3 du dispositif pont B0 120.

La réponse à la requête de découverte est alors reçue sur le port 3 du dispositif pont B2 122, et le processeur de pont BP2 432 scrute la base de données de commutation FDB2 422 pour déterminer via quel port transmettre en mode point-à-point un paquet de données au nouveau dispositif station STA1 141. Alors, dans une étape 512, le processeur de pont BP2 432 propage la réponse à la requête de découverte via le port 1 du dispositif pont B2 122.

La réponse à la requête de découverte est alors reçue sur le port 2 du dispositif pont B1 121, et le processeur de pont BP1 431 scrute la base de données de commutation FDB1 421 pour déterminer via quel port transmettre en mode point-à-point un paquet de données au nouveau dispositif station STA1 141. Alors, dans une étape 513, le processeur de pont BP2 431 propage la réponse à la requête de découverte via le port 1 du dispositif pont B1 121. La réponse à la requête de découverte est alors reçue par le nouveau dispositif station STA1 141, qui dispose alors de l'adresse routable (typiquement, l'adresse IP) qui lui a été attribuée.

Le contenu des bases de données de commutation FDB0 420, FDB1 421, FDB2 422 est ultérieurement revu pendant la mise en place et la mise à jour du routage dynamique (configuration de premier réseau logique). Come détaillé ci-après, la mise en place et la mise à jour du routage dynamique reposent sur des échanges de messages (paquets de données) de proche en proche entre les dispositifs ponts. Par conséquent, ces messages n'ont pas besoin d'être propagés en tant que tels au travers des dispositifs ponts B0 120, B1 121, B2 122. La mise en place et la mise à jour du routage dynamique ne sont donc pas impactées par l'absence de règles concernant les dispositifs ponts B0 120, B1 121, B2 122 dans les bases de données de commutation FDB0 420, FDB1 421, FDB2 422 à ce stade.

La Fig. 5D illustre schématiquement des opérations de mise en place, ou de mise à jour, de routage dynamique (configuration de premier réseau logique) dans le réseau de communication maillé 100.

Différents événements de modification de topologie réseau entraînent des échanges entre voisins immédiats du réseau de communication maillé 100 parmi les dispositifs ponts B0 120, B1 121, B2 122 : insertion d'un dispositif pont, disparition d'un dispositif pont, apparition d'un nouveau lien entre dispositifs ponts, disparition d'un lien entre dispositifs ponts (e.g., dégradation d'une liaison sans-fil en dessous d'un seuil prédéfini de qualité de liaison), changement d'au moins une caractéristique d'au moins un lien entre dispositifs ponts de sorte à entraîner un changement d'au moins un score (ou un coût) de route dans le réseau de communication maillé 100, et donc une détermination de nouvelles routes optimisées à travers le réseau de communication maillé 100.

Dans un mode de réalisation particulier, les dispositifs ponts B0 120, B1 121, B2 122 utilisent, pour ce faire, des adresses de niveau 3 du modèle OSI qui constituent un plan d'adressage de contrôle du réseau de communication maillé 100. Ces adresses de plan d'adressage de contrôle sont dédiées aux communications entre voisins immédiats parmi les dispositifs ponts B0 120, B1 121, B2 122 et les messages qui utilisent de telles adresses ne sont donc pas propagés par les dispositifs ponts B0 120, B1 121, B2 122 dans le réseau de communication maillé 100. A ce titre, il convient de noter que le traitement de tels messages n'interagit pas avec les bases de données de commutation FDB0 420, FDB1 421, FDB2 422. Ces communications entre voisins immédiats parmi les dispositifs ponts B0 120, B1 121, B2 122 sont représentés par des échanges 521, 522, 523 sur la Fig. 5D.

L'attribution de ces adresses de plan d'adressage de contrôle (typiquement, des adresses IP) peut se faire de manière distribuée, par exemple selon le document normatif RFC 3927 « Dynamic Configuration of IPv4 Link-Local Addresses » ou selon le document normatif RFC 4862 « IPv6 Stateless Address Autoconfiguration ». A noter que les adresses de niveau 3 du modèle OSI utilisées par des messages (ou paquets de données) qui doivent être propagés par les dispositifs ponts B0 120, B1 121, B2 122 dans le réseau de communication maillé 100 constituent un plan d'adressage domestique, séparé du plan d'adressage de contrôle. Ce sont les adresses du plan d'adressage domestique, et non celles du plan d'adressage de contrôle, qui apparaissent dans les listes L0 410, L1 411, L2 412.

A chaque ajout ou retrait d'un dispositif pont, une revue de routage dynamique intervient du fait du changement de topologie du réseau de communication maillé 100. Des communications entre voisins immédiats parmi les dispositifs ponts B0 120, B1 121, B2 122 s'opèrent à nouveau, les listes L0 410, L1 411, L2 412 sont alors mises à jour en conséquence. De même, à chaque ajout ou retrait d'un lien entre dispositifs ponts des communications entre voisins immédiats parmi les dispositifs ponts B0 120, B1 121, B2 122 s'opèrent aussi, afin de mettre là aussi à jour une représentation topologique du réseau de communication maillé 100 auprès de chaque dispositif pont B0 120, B1 121, B2 122, permettant ainsi de déterminer en temps-réel quelles sont les routes les plus adaptées pour atteindre chaque dispositif du réseau de communication maillé 100 ou connecté au réseau de communication 100.

A noter que pour la détection de l'apparition ou disparition d'un port (typiquement activation d'une interface de dispositif pont), des événements sont générés par le dispositif pont concerné, pour générer l'allocation, respectivement la suppression, d'une adresse du plan d'adressage de contrôle liée au port en question. Cette modification du plan d'adressage de contrôle est propagée entre les dispositifs ponts B0 120, B1 121, B2 122 pour refléter la topologie du réseau de communication maillé 100.

À chaque ajout ou retrait d'un dispositif station, les routes impliquant le dispositif station en question (source ou destination) sont calculées par mise à jour du routage dynamique en conséquence. L'ajout, ou le retrait, d'un dispositif station se traduit par l'apparition, respectivement la disparition, d'une adresse de niveau 3 dans le modèle OSI (typiquement adresse IP). Par exemple, les dispositifs ponts B0 120, B1 121, B2 122 écoutent et analysent différentes trames circulant dans le réseau de communication maillé 100, comme les trames DHCP et ARP (« Address Resolution Protocol » en anglais), pour identifier les équipements présents et déterminer leurs adresses MAC et IP. Par exemple, il existe diverses technologies pour détecter les adresses IPv4/IPv6 de dispositifs connectés à un réseau de communication, comme l'inspection d'entêtes de paquets de données trames, l'inspection profonde de messages DHCP (IPv4) ou Neighbour Advertisement (IPv6)... La détection de l'apparition/disparition d'une adresse de niveau 3 du modèle OSI permet d'ajouter/éliminer celle-ci dans le routage dynamique. Chaque dispositif pont B0 120, B1 121, B2 122 détectant une apparition/disparition d'adresse de niveau 3 du modèle OSI propage des informations correspondantes aux autres dispositifs ponts B0 120, B1 121, B2 122 par échanges de messages de niveau 3 du modèle OSI entre voisins immédiats.

Lorsqu'un dispositif est ajouté, dans un mode de réalisation particulier, les informations incluent aussi l'adresse de niveau 2 du modèle OSI (typiquement adresse MAC) du dispositif concerné. Comme expliqué ci-dessus, la correspondance entre adresse de niveau 2 du modèle OSI (typiquement adresse MAC) et adresse de niveau 3 du modèle OSI (typiquement adresse IP) peut être obtenue par inspection de messages dans le réseau de communication 100 (typiquement, des messages transmis en mode de diffusion), comme par exemple des trames DHCP ou ARP.

Ainsi, la première configuration de premier réseau logique est obtenue par échanges de messages de niveau 3 du modèle OSI entre voisins immédiats parmi les dispositifs ponts B0 120, B1 121, B2 122.

Alors, chaque dispositif pont B0 120, B1 121, B2 122 est informé de la présence du dispositif station STA1 141 par son adresse de niveau 3 du modèle OSI et du chemin optimisé dans le réseau de communication pour l'atteindre au vu de la première configuration de premier réseau logique.

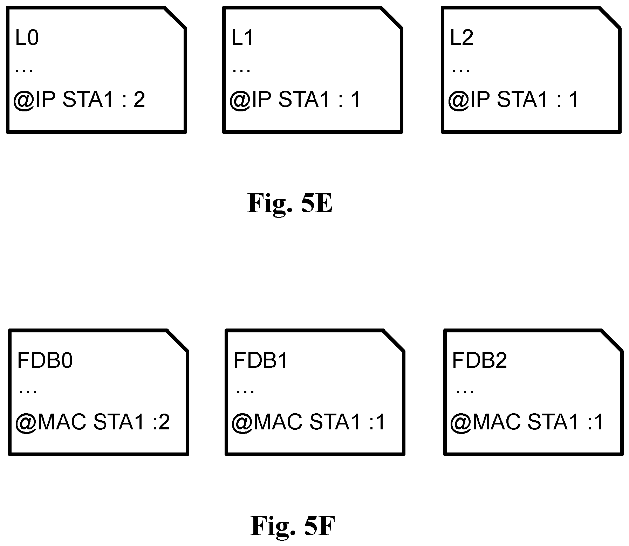

Alors comme illustré schématiquement sur la Fig. 5E, les listes L0 410, L1 411, L2 412 sont mises à jour avec une entrée correspondant à l'adresse de niveau 3 du modèle OSI (typiquement adresse IP) du dispositif station STA1 141 associée à l'identifiant du port (du dispositif pont en question) à utiliser pour acheminer des paquets en mode point-à-point à destination dudit dispositif station, comme déterminé par le routage dynamique.

Et, pour permettre le routage optimisé des transmissions en mode point-à-point dans le réseau de communication maillé 100, chaque dispositif pont B0 120, B1 121, B2 122 effectue une retranscription de cette entrée correspondant à l'adresse de niveau 3 du modèle OSI depuis la liste L0 410, L1 411, L2 412 en question vers la base de données de commutation FDB0 420, FDB1 421, FDB2 422 correspondante.

Comme illustré schématiquement sur la Fig. 5F, il en ressort alors que les bases de données de commutation FDB0 420, FDB1 421, FDB2 422 sont revues au besoin, et considérant que le chemin pour atteindre le dispositif station STA1 141 depuis le dispositif pont B2 122 est plus court en passant par le port 1 du dispositif pont B2 122 plutôt que par le port 3 du dispositif pont B2 122, l'entrée correspondante dans la base de données de commutation FDB2 422 est mise à jour en conséquence.

Ainsi, lorsqu'un paquet de données doit être émis ou propagé en mode point-à-point par le dispositif pont B2 122 à destination du dispositif station STA1 141, le port 3 du dispositif pont B2 122 est utilisé. L'acheminement du paquet de données en mode point-à-point est ainsi optimisé (premier réseau logique) et ne suit pas l'arbre couvrant (second réseau logique) qui a pu être établi conformément à la topologie actuelle du réseau de communication maillé 100.

Dans un mode de réalisation particulier, lorsque le dispositif DEV0 110 est une passerelle domestique offrant un accès à un réseau étendu (« Wide Area Network » en anglais), une interface d'accès au réseau étendu peut être exportée (rendue visible) dans le réseau de communication maillé 100 par le dispositif DEV0 110 comme un dispositif à part entière connecté au réseau de communication maillé 100. Cette interface d'accès au réseau étendu est connectée sur un des ports du dispositif pont B0 120 (par exemple, le port 1 du dispositif pont B0 120). Une adresse de niveau 2 dans le modèle OSI (typiquement une adresse MAC) est affectée à cette interface d'accès au réseau étendu, et les étapes des Figs. 3A et 3B sont exécutées pour l'interface d'accès au réseau étendu comme pour n'importe quel dispositif station connecté au réseau de communication maillé 100. Ainsi, l'interface d'accès au réseau étendu est prise en compte dans le routage dynamique de manière simple et efficace, et les dispositifs stations connectés au réseau de communication maillé 100 ont aisément accès au réseau étendu, tel que l'Internet, tout en bénéficiant d'un routage optimisé en mode point-à-point dans le réseau de communication maillé 100.

Dans un mode de réalisation particulier, lorsque les comportements de dispositifs ponts décrits ci-dessus sont implémentés en prenant comme point de départ un dispositif pont classique, il est à noter que les fonctions d'apprentissage (« learning » en anglais) et de propagation (« forwarding » en anglais) de ce dispositif pont classique doivent être supprimées ou désactivées, de manière à ne pas entrer en conflit avec le routage dynamique et la retranscription de son résultat dans la base de données de commutation, tels que proposés ci-dessus.

## Revendications

1. Un procédé de transmission de paquets de données dans un réseau de communication maillé (100) de type réseau local qui interconnecte des dispositifs ponts (120, 121, 122), dans lequel chaque dispositif pont (120, 121, 122) utilise (303) en parallèle :
- une première configuration de premier réseau logique, qui est utilisée pour acheminer des paquets de données en mode point-à-point, et qui est définie par un routage dynamique entre les dispositifs ponts (120, 121, 122) ; et
- une seconde configuration de second réseau logique, qui est utilisée pour acheminer des paquets de données en mode diffusion ou point-multipoint, et qui est définie selon un arbre couvrant par blocage d'un ou plusieurs ports des dispositifs ponts (120, 121, 122) pour éliminer une ou plusieurs boucles du réseau de communication maillé (100),
le procédé étant **caractérisé en ce que**, dans chaque dispositif pont (120, 121, 122), la première configuration de premier réseau logique implique une retranscription d'une liste au niveau 3 du modèle OSI (410, 411, 412) dans une base de données de commutation de niveau 2 du modèle OSI (420, 421, 422), la liste recensant l'adresse de niveau 3 du modèle OSI de chaque dispositif du réseau de communication maillé (100) ou connecté au réseau de communication maillé (100) en association avec un identifiant de port du dispositif pont (120, 121, 122) en question à utiliser pour acheminer des paquets de données à destination du dispositif en question, la liste étant obtenue lors du routage dynamique.

2. Le procédé selon la revendication 1, dans lequel la seconde configuration de second réseau logique est obtenue par utilisation d'un réseau local virtuel.

3. Le procédé selon la revendication 1 ou 2, dans lequel lorsqu'un nouveau dispositif station (141) est connecté à un port d'un dit dispositif pont (121), chaque dispositif pont (120, 121, 122) effectue les étapes suivantes :
- utiliser (311) la seconde configuration de second réseau logique pour acheminer dans le réseau de communication maillé (100) une requête de découverte issue du nouveau dispositif station (141) ;
- mettre à jour (312) la base de données de commutation de niveau 2 du modèle OSI du dispositif pont en question (120, 121, 122) avec une adresse MAC du nouveau dispositif station (141) en association avec un identifiant du port, du dispositif pont en question (120, 121, 122), par lequel la requête de découverte est arrivée ;
- utiliser (313) la base de données de commutation de niveau 2 du modèle OSI ainsi mise à jour pour acheminer dans le réseau de communication maillé (10) une réponse à la requête de découverte, dans laquelle une adresse de niveau 3 du modèle OSI, qui est affectée au nouveau dispositif station (141), est incluse ;
- enrichir la liste au niveau 3 du modèle OSI avec l'adresse de niveau 3 du modèle OSI, qui est affectée au nouveau dispositif station (141) et déterminer l'identifiant de port à y associer grâce au routage dynamique ;
- modifier (315) la base de données de commutation de niveau 2 du modèle OSI du dispositif pont en question (120, 121, 122) pour retranscrire, le cas échéant, le routage dynamique correspondant à l'adresse de niveau 3 du modèle OSI affectée au nouveau dispositif station (141).

4. Le procédé selon l'une quelconque des revendications 1 à 3, dans lequel la première configuration de premier réseau logique est obtenue par échanges (521, 522, 523) de messages de niveau 3 du modèle OSI entre voisins immédiats du réseau de communication maillé (100) parmi les dispositifs ponts (120, 121, 122).

5. Le procédé selon l'une quelconque des revendications 1 à 4, dans lequel la première configuration de premier réseau logique et la seconde configuration de second réseau logique sont mises à jour en cas de changement de topologie du réseau de communication maillé (100) qui interconnecte les dispositifs ponts (120, 121, 122), et dans lequel la première configuration de premier réseau logique uniquement est mise à jour en cas de connexion d'un dispositif station (141, 142) au réseau de communication maillé (100) ou de déconnexion du dispositif station (141, 142) du réseau de communication maillé (100).

6. Un produit programme d'ordinateur comportant des instructions causant une implémentation du procédé selon l'une quelconque des revendications 1 à 5, lorsque les instructions sont exécutées par un processeur.

7. Un support de stockage d'informations comportant des instructions causant une implémentation du procédé selon l'une quelconque des revendications 1 à 5, lorsque les instructions sont lues depuis le support de stockage d'informations et exécutées par un processeur.

8. Un dispositif pont (120, 121, 122) destiné à être utilisé dans un réseau de communication maillé (100) de type réseau local qui interconnecte plusieurs tels dispositifs ponts, le dispositif pont (120, 121, 122) comportant de la circuiterie électronique configurée pour utiliser en parallèle :
- une première configuration de premier réseau logique, qui est utilisée pour acheminer des paquets de données en mode point-à-point, et qui est définie par un routage dynamique entre les dispositifs ponts (120, 121, 122) ; et
- une seconde configuration de second réseau logique, qui est utilisée pour acheminer des paquets de données en mode diffusion ou point-multipoint, et qui est définie selon un arbre couvrant par blocage d'un ou plusieurs ports des dispositifs ponts (120, 121, 122) pour éliminer une ou plusieurs boucles du réseau de communication maillé,
le dispositif pont (120, 121, 122) étant **caractérisé en ce que** la première configuration de premier réseau logique implique une retranscription d'une liste au niveau 3 du modèle OSI (410, 411, 412) dans une base de données de commutation de niveau 2 du modèle OSI (420, 421, 422), la liste recensant l'adresse de niveau 3 du modèle OSI de chaque dispositif du réseau de communication maillé (100) ou connecté au réseau de communication maillé (100) en association avec un identifiant de port du dispositif pont (120, 121, 122) à utiliser pour acheminer des paquets de données à destination du dispositif en question, la liste étant obtenue lors du routage dynamique.

9. Un réseau de communication maillé (100) de type réseau local qui interconnecte plusieurs dispositifs ponts selon la revendication 8.

10. Le réseau de communication maillé (100) selon la revendication 9, dans lequel un dit dispositif pont (120) est inclus dans une passerelle domestique et les autres dits dispositifs ponts (121, 122) sont respectivement inclus dans des extendeurs de réseau local sans-fil.

## Patentansprüche

1. Verfahren zur Übertragung von Datenpaketen in einem vermaschten Kommunikationsnetz (100) vom Typ eines lokalen Netzes, das Brückenvorrichtungen (120, 121, 122) miteinander verbindet, wobei jede Brückenvorrichtung (120, 121, 122) Folgendes parallel benutzt (303):
- eine erste Konfiguration eines ersten logischen Netzes, die dafür verwendet wird, Datenpakete im Punkt-zu-Punkt-Modus weiterzuleiten, und die durch ein dynamisches Routing zwischen den Brückenvorrichtungen (120, 121, 122) definiert ist; und
- eine zweite Konfiguration eines zweiten logischen Netzes, die dafür verwendet wird, Datenpakete im Broadcast- oder Punkt-zu-Mehrpunkt-Modus weiterzuleiten, und die gemäß einem Spannbaum durch Sperrung eines oder mehrerer Ports der Brückenvorrichtungen (120, 121, 122) definiert ist, um eine oder mehrere Schleifen aus dem vermaschten Kommunikationsnetz (100) zu entfernen,
wobei das Verfahren **dadurch gekennzeichnet ist, dass** in jeder Brückenvorrichtung (120, 121, 122) die erste Konfiguration des ersten logischen Netzes eine Rückübertragung einer Liste auf Ebene 3 des OSI-Modells (410, 411, 412) in eine Weiterleitungsdatenbank der Ebene 2 des OSI-Modells (420, 421, 422) impliziert, wobei die Liste die Adresse der Ebene 3 des OSI-Modells jeder Vorrichtung des vermaschten Kommunikationsnetzes (100) oder mit dem vermaschten Kommunikationsnetz (100) verbunden verzeichnet, in Verbindung mit einer Port-Kennung der betreffenden Brückenvorrichtung (120, 121, 122), die zu verwenden ist, um Datenpakete zur betreffenden Vorrichtung weiterzuleiten, wobei die Liste beim dynamischen Routing erhalten wird.

2. Verfahren nach Anspruch 1, wobei die zweite Konfiguration des zweiten logischen Netzes durch Verwendung eines virtuellen lokalen Netzes erhalten wird.

3. Verfahren nach Anspruch 1 oder 2, wobei, wenn eine neue Stationsvorrichtung (141) mit einem Port einer Brückenvorrichtung (121) verbunden ist, jede Brückenvorrichtung (120, 121, 122) die folgenden Schritte durchführt:
- Verwenden (311) der zweiten Konfiguration des zweiten logischen Netzes, um eine Erkennungsanfrage von der neuen Stationsvorrichtung (141) im vermaschten Kommunikationsnetz (100) weiterzuleiten;
- Aktualisieren (312) der Weiterleitungsdatenbank der Ebene 2 des OSI-Modells der betreffenden Brückenvorrichtung (120, 121, 122) mit einer MAC-Adresse der neuen Stationsvorrichtung (141) in Verbindung mit einer Kennung des Ports der betreffenden Brückenvorrichtung (120, 121, 122), durch welchen die Erkennungsanfrage eingetroffen ist;
- Verwenden (313) der so aktualisierten Weiterleitungsdatenbank der Ebene 2 des OSI-Modells, um eine Antwort auf die Erkennungsanfrage im vermaschten Kommunikationsnetz (10) weiterzuleiten, in der eine Adresse der Ebene 3 des OSI-Modells, die der neuen Stationsvorrichtung (141) zugewiesen wird, enthalten ist;
- Anreichern der Liste auf Ebene 3 des OSI-Modells mit der Adresse der Ebene 3 des OSI-Modells, die der neuen Stationsvorrichtung (141) zugewiesen wird, und Bestimmen der ihr zuzuordnenden Port-Kennung mithilfe des dynamischen Routings;
- Verändern (315) der Weiterleitungsdatenbank der Ebene 2 des OSI-Modells der betreffenden Brückenvorrichtung (120, 121, 122), um gegebenenfalls das dynamische Routing rückzuübertragen, das der Adresse der Ebene 3 des OSI-Modells entspricht, die der neuen Stationsvorrichtung (141) zugewiesen wird.

4. Verfahren nach einem der Ansprüche 1 bis 3, wobei die erste Konfiguration des ersten logischen Netzes durch Austausch (521, 522, 523) von Nachrichten der Ebene 3 des OSI-Modells zwischen unmittelbaren Nachbarn des vermaschten Kommunikationsnetzes (100) unter den Brückenvorrichtungen (120, 121, 122) erhalten wird.

5. Verfahren nach einem der Ansprüche 1 bis 4, wobei die erste Konfiguration des ersten logischen Netzes und die zweite Konfiguration des zweiten logischen Netzes im Falle einer Topologieänderung des vermaschten Kommunikationsnetzes (100), das die Brückenvorrichtungen (120, 121, 122) verbindet, aktualisiert werden, und wobei nur die erste Konfiguration des ersten logischen Netzes im Falle einer Verbindung einer Stationsvorrichtung (141, 142) mit dem vermaschten Kommunikationsnetz (100) oder einer Trennung der Stationsvorrichtung (141, 142) vom vermaschten Kommunikationsnetz (100) aktualisiert wird.

6. Computerprogrammprodukt mit Anweisungen, die eine Implementierung des Verfahrens nach einem der Ansprüche 1 bis 5 bewirken, wenn die Anweisungen durch einen Prozessor ausgeführt werden.

7. Informationsspeichermedium mit Anweisungen, die eine Implementierung des Verfahrens nach einem der Ansprüche 1 bis 5 bewirken, wenn die Anweisungen aus dem Informationsspeichermedium gelesen und durch einen Prozessor ausgeführt werden.

8. Brückenvorrichtung (120, 121, 122) zur Verwendung in einem vermaschten Kommunikationsnetz (100) vom Typ eines lokalen Netzes, das mehrere solche Brückenvorrichtungen miteinander verbindet, wobei die Brückenvorrichtung (120, 121, 122) eine elektronische Schaltung aufweist, die dazu ausgebildet ist, Folgendes parallel zu benutzen:
- eine erste Konfiguration eines ersten logischen Netzes, die dafür verwendet wird, Datenpakete im Punkt-zu-Punkt-Modus weiterzuleiten, und die durch ein dynamisches Routing zwischen den Brückenvorrichtungen (120, 121, 122) definiert ist; und
- eine zweite Konfiguration eines zweiten logischen Netzes, die dafür verwendet wird, Datenpakete im Broadcast- oder Punkt-zu-Mehrpunkt-Modus weiterzuleiten, und die gemäß einem Spannbaum durch Sperrung eines oder mehrerer Ports der Brückenvorrichtungen (120, 121, 122) definiert ist, um eine oder mehrere Schleifen aus dem vermaschten Kommunikationsnetz zu entfernen,
wobei die Brückenvorrichtung (120, 121, 122) **dadurch gekennzeichnet ist, dass** die erste Konfiguration des ersten logischen Netzes eine Rückübertragung einer Liste auf Ebene 3 des OSI-Modells (410, 411, 412) in eine Weiterleitungsdatenbank der Ebene 2 des OSI-Modells (420, 421, 422) impliziert, wobei die Liste die Adresse der Ebene 3 des OSI-Modells jeder Vorrichtung des vermaschten Kommunikationsnetzes (100) oder mit dem vermaschten Kommunikationsnetz (100) verbundenen verzeichnet, in Verbindung mit einer Port-Kennung der Brückenvorrichtung (120, 121, 122), die zu verwenden ist, um Datenpakete zur betreffenden Vorrichtung weiterzuleiten, wobei die Liste beim dynamischen Routing erhalten wird.

9. Vermaschtes Kommunikationsnetz (100) vom Typ eines lokalen Netzes, das mehrere Brückenvorrichtungen nach Anspruch 8 miteinander verbindet.

10. Vermaschtes Kommunikationsnetz (100) nach Anspruch 9, wobei eine Brückenvorrichtung (120) in einem Heimgateway enthalten ist und die anderen Brückenvorrichtungen (121, 122) jeweils in Erweiterern für drahtlose lokale Netze enthalten sind.

## Claims

1. A method for transmitting data packets in a mesh communication network (100) of the local area network type that interconnects bridge devices (120, 121, 122), wherein each bridge device (120, 121, 122) uses (303) in parallel:
- a first configuration of a first logic network, which is used for conveying data packets in unicast mode, and which is defined by a dynamic routing between the bridge devices (120, 121, 122); and
- a second configuration of a second logic network, which is used for conveying data packets in broadcast or multicast mode, and which is defined as a spanning tree by blocking one or more ports of the bridge devices (120, 121, 122) to eliminate one or more loops in the mesh communication network (100),
the method being **characterised in that**, in each bridge device (120, 121, 122), the first configuration of a first logic network involves a retranscription of a list at layer 3 of the OSI model (410, 411, 412) in a forwarding database of layer 2 of the OSI model (420, 421, 422), the list listing the OSI-model layer-3 address of each device of the mesh communication network (100) or connected to the mesh communication network (100) in association with a port identifier of the bridge device (120, 121, 122) in question to be used for conveying data packets intended for the device in question, the list being obtained during the dynamic routing.

2. The method according to claim 1, wherein the second configuration of a second logic network is obtained by using a virtual local network.

3. The method according to claim 1 or 2, wherein, when a new station device (141) is connected to a port of a said bridge device (121), each bridge device (120, 121, 122) performs the following steps:
- using (311) the second configuration of the second logic network for conveying, in the mesh communication network (100), a discovery request coming from the new station device (141);
- updating (312) the OSI-model layer-2 forwarding database of the bridge device in question (120, 121, 122) with a MAC address of the new station device (141) in association with an identifier of the port, of the device in question (120, 121, 122), by which the discovery request arrived;
- using (313) the OSI-model layer-2 forwarding database thus updated to convey, in the mesh communication network (10), a response to the discovery request, in which an OSI-model layer-3 address, which is allocated to the new base station (141), is included;
- enriching the list at layer 3 of the OSI model with the OSI-model layer-3 address, which is allocated to the new base station (141), and determining the port identifier to be associated therewith by means of the dynamic routing;
- modifying (315) the OSI-model layer-2 forwarding database of the bridge device in question (120, 121, 122) to retranscribe, where applicable, the dynamic routing corresponding to the OSI-model layer-3 address allocated to the new station device (141).

4. The method according to any one of claims 1 to 3, wherein the first configuration of the first logic network is obtained by OSI-model layer-3 message exchanges (521, 522, 523) between immediate neighbours of the mesh communication network (100) among the bridge devices (120, 121, 122).

5. The method according to any one of claims 1 to 4, wherein the first configuration of a first logic network and the second configuration of a second logic network are updated in the event of change of topology of the mesh communication network (100) that interconnects the bridge devices (120, 121, 122), and wherein the first configuration of a first logic network only is updated in the event of connection of a station device (141, 142) to the mesh communication network (100) or of disconnection of the station device (141, 142) from the mesh communication network (100).

6. A computer program product comprising instructions causing an implementation of the method according to any one of claims 1 to 5, when the instructions are executed by a processor.

7. An information storage medium comprising instructions causing an implementation of the method according to any one of claims 1 to 5, when the instructions are read from the information storage medium and executed by a processor.

8. A bridge device (120, 121, 122) intended to be used in a mesh communication network (100) of the local area network type that interconnects several such bridge devices, the bridge device (120, 121, 122) comprising electronic circuitry configured to use in parallel:
- a first configuration of a first logic network, which is used for conveying data packets in unicast mode, and which is defined by a dynamic routing between the bridge devices (120, 121, 122); and
- a second configuration of a second logic network, which is used for conveying data packets in broadcast or multicast mode, and which is defined as a spanning tree by blocking one or more ports of the bridge devices (120, 121, 122) to eliminate one or more loops in the mesh communication network,
the bridge device (120, 121, 122) being **characterised in that** the first configuration of a first logic network involves a retranscription of a list at layer 3 of the OSI model (410, 411, 412) in a forwarding database of layer 2 of the OSI model (420, 421, 422), the list listing the OSI-model layer-3 address of each device of the mesh communication network (100) or connected to the mesh communication network (100) in association with a port identifier of the bridge device (120, 121, 122) to be used for conveying data packets intended for the device in question, the list being obtained during the dynamic routing

9. A mesh communication network (100) of the local area network type that interconnects several bridge devices according to claim 8.

10. The mesh communication network (100) according to claim 9, wherein one said bridge device (120) is included in a residential gateway and the other said bridge devices (121, 122) are respectively included in extenders of a local area network.
